# EUROPEAN PATENT APPLICATION

(11) **EP 4 806 718 A1**
(43) Date of publication of application: **16.09.2026**
(21) Application number: 24887672.4
(22) Date of filing: 29.09.2024
(51) Int. Cl.: B60L 53/16, B60L 53/00, B60L 50/64, B60L 58/10, B60K 1/04, H01M 50/244, H01M 50/249, H01M 10/613, H01M 10/625

(54) **BATTERY PACK, CHASSIS, ELECTRIC DEVICE, AND CHARGING CONTROL METHOD FOR ELECTRIC DEVICE**

(30) Priority: 08.11.2023 CN 202311491004
(71) Applicant: BYD Company Limited, Shenzhen, Guangdong 518118 (CN)
(72) Inventor: DENG, Linwang, Shenzhen, Guangdong 518118 (CN); WANG, Chengzhi, Shenzhen, Guangdong 518118 (CN); ZHANG, Dapeng, Shenzhen, Guangdong 518118 (CN); LIN, Siqi, Shenzhen, Guangdong 518118 (CN); CHEN, Gang, Shenzhen, Guangdong 518118 (CN)
(74) Representative: Mathys & Squire
(86) International application number: PCT/CN2024/122290
(87) International publication number: WO 2025/098054

(57) **Abstract**

A battery pack (100) of an electric device (1000). The battery pack (100) is provided with a charging interface (4), and the battery pack (100) further comprises a housing (1) and a battery group (2). The battery group (2) is disposed within the housing (1), the charging interface (4) is electrically connected to the battery group (2) so as to charge the battery pack (100) by means of the charging interface (4), and the charging interface (4) is suitable for being directly electrically connected to an external charging device.

## Description

### CROSS-REFERENCE TO RELATED APPLICATIONS

The present disclosure claims priority to Chinese Patent Application No. 202311491004.X filed on November 8, 2023, which is incorporated herein by reference in its entirety.

### FIELD

The present disclosure relates to the field of batteries, and in particular, to a battery pack, a chassis, an electric device, and a charging control method for an electric device.

### BACKGROUND

With the popularization of new energy vehicles, the demand for fast charging of new energy vehicles is increasing. In the related art, an on-board charging interface of a new energy vehicle is generally arranged at a rear portion of the vehicle, and a battery pack is arranged in a middle portion of a chassis. The existing battery pack structure has problems of excessive heat generation in circuits and low charging efficiency during the charging process.

### SUMMARY

The present disclosure aims to solve at least one of the technical problems in the related art to a certain extent.

For this purpose, one objective of the present disclosure is to provide a battery pack of an electric device, which has a short charging current path, can reduce electric energy loss caused by power transmission impedance, and has high charging efficiency, which helps to reduce charging time.

According to an embodiment of the present disclosure, the battery pack has a charging interface, and the battery pack further includes: a housing; and a battery group, wherein the battery group is disposed within the housing, the charging interface is electrically connected to the battery group to charge the battery pack via the charging interface; and the charging interface is suitable for being directly electrically connected to an external charging device.

According to the battery pack of the electric device of the embodiment of the present disclosure, with the charging interface disposed on the battery pack, the external charging device can directly charge the battery pack via the charging interface, which helps to shorten the charging current path, reduce electric energy loss caused by power transmission impedance, and improve charging efficiency. The embodiment of the present disclosure particularly improves the efficiency of the battery pack for direct current charging with high current, and greatly reduces heat generation during high current charging, that is, simultaneously improves the efficiency and safety of the battery pack for high current fast charging. The significant reduction in heat generation and the direct electrical connection with the external device can effectively increase the conductive area for charging, thereby making fast charging with high current possible and reducing charging time.

According to some embodiments of the battery pack of the electric device of the present disclosure, the charging interface is disposed at a bottom or a side of the housing.

According to some embodiments of the battery pack of the electric device of the present disclosure, the charging interface includes at least two contact metal sheets; and/or the charging interface includes a plug interface.

According to some embodiments of the battery pack of the electric device of the present disclosure, the charging interface includes at least two contact metal sheets, the external charging device includes a charging metal sheet, and an area of each of the contact metal sheets is suitable for being larger than an area of the charging metal sheet.

According to some embodiments of the battery pack of the electric device of the present disclosure, a total area of the contact metal sheets of the same polarity is ≥ 3000 mm².

According to some embodiments of the battery pack of the electric device of the present disclosure, the contact metal sheet is suitable for being arranged at an angle with the charging metal sheet.

According to some embodiments of the battery pack of the electric device of the present disclosure, it further includes a charging control module. The charging control module includes a main controller, a positive electrode switch, and a negative electrode switch. The main controller is configured to receive a charging instruction. The main controller is electrically connected to the positive electrode switch and the negative electrode switch respectively to control opening and closing thereof. The charging interface is electrically connected to the battery group via the positive electrode switch and the negative electrode switch.

According to some embodiments of the battery pack of the electric device of the present disclosure, the charging interface is exposed from the charging control module.

According to some embodiments of the battery pack of the electric device of the present disclosure, the charging interface is electrically connected to an input terminal of the positive electrode switch via a metal conductive piece, and/or the charging interface is electrically connected to an input terminal of the negative electrode switch via a metal conductive piece.

According to some embodiments of the battery pack of the electric device of the present disclosure, the battery group includes a plurality of battery cells, and the plurality of battery cells are electrically connected to a busbar component; an output terminal of the positive electrode switch is directly electrically connected to the busbar component, and/or an output terminal of the negative electrode switch is directly electrically connected to the busbar component.

According to some embodiments of the battery pack of the electric device of the present disclosure, it further includes a communication module. The communication module interacts with an external device to receive the charging instruction, and the communication module is communicatively connected to the main controller.

According to some embodiments of the battery pack of the electric device of the present disclosure, it further includes a heat exchange assembly configured for heat exchange with the battery group.

According to some embodiments of the battery pack of the electric device of the present disclosure, a part of the heat exchange assembly extends to the charging control module to perform heat exchange with the charging control module.

According to some embodiments of the battery pack of the electric device of the present disclosure, it further includes a buffer member. The buffer member is arranged between a bottom wall of the housing and the battery group.

According to some embodiments of the battery pack of the electric device of the present disclosure, the housing has an opening for clearing the charging interface.

According to some embodiments of the battery pack of the electric device of the present disclosure, it further includes an opening and closing assembly for opening or closing the opening, and the opening and closing assembly is disposed on the housing.

According to some embodiments of the battery pack of the electric device of the present disclosure, the opening and closing assembly includes a moving member and a driving member. The moving member is movably disposed on the housing to open or close the opening, and the driving member is connected to the moving member to drive the moving member to move.

According to some embodiments of the battery pack of the electric device of the present disclosure, the driving member includes: a motor; a rotating member, wherein the rotating member is connected to the motor so as to be driven by the motor to rotate; and a converting member, the converting member is connected to the rotating member and the moving member respectively, and the converting member is configured to convert rotation of the rotating member into movement of the moving member.

According to some embodiments of the battery pack of the electric device of the present disclosure, the housing has a guide groove for guiding a movement direction of the moving member, and the moving member is movably engaged with the guide groove.

According to some embodiments of the battery pack of the electric device of the present disclosure, it further includes a charging control module. The charging control module is electrically connected to the charging interface and the battery group respectively. The charging control module is configured to control connection between the charging interface and the battery group when receiving the charging instruction. The charging control module is electrically connected to the opening and closing assembly, and the charging control module is configured to control the opening and closing assembly to open the opening when receiving the charging instruction.

According to some embodiments of the battery pack of the electric device of the present disclosure, the charging interface is exposed from the battery pack, and the electric device has a relief opening for clearing the charging interface.

The present disclosure also provides a chassis of a vehicle.

According to an embodiment of the present disclosure, a chassis of a vehicle includes the battery pack of the electric device according to any one of the above embodiments.

According to the chassis of the vehicle of the embodiment of the present disclosure, with the charging interface disposed on the battery pack, the external charging device can directly charge the battery pack via the charging interface, which helps to shorten the charging current path, reduce electric energy loss caused by power transmission impedance, improve charging efficiency, reduce charging time, and improve the overall performance of the chassis.

According to some embodiments of the chassis of the vehicle of the present disclosure, the housing is configured as a part of a floor panel of the vehicle.

The present disclosure also provides an electric device.

According to an embodiment of the present disclosure, the electric device includes the battery pack of the electric device according to any one of the above embodiments or includes the chassis of the vehicle according to any one of the above embodiments, and the vehicle is charged directly via the charging interface.

According to the electric device of the embodiment of the present disclosure, with the charging interface disposed on the battery pack, the charging device can directly charge the battery pack via the charging interface, which helps to shorten the charging current path, reduce electric energy loss caused by power transmission impedance, improve charging efficiency, reduce charging time, and enhance user satisfaction.

The present disclosure further provides a charging control method for an electric device.

A charging control method for an electric device according to an embodiment of the present disclosure, the electric device including the battery pack according to any one of the above embodiments, the control method includes: a charging instruction is received; and in response to the charging instruction, connection between the charging interface and the battery group is controlled to charge the battery pack.

According to the charging control method for the electric device of the embodiment of the present disclosure, by configuring the charging interface to be electrically connected to the battery group after receiving the charging instruction, it is possible to prevent the battery pack from being electrically connected to an external charging device in a non-charging state, which helps to improve the safety of the battery pack.

According to some embodiments of the charging control method for the electric device of the present disclosure, before controlling the connection between the charging interface and the battery group, the method further includes: if the charging interface and the external charging device are not connected, a prompt message is issued.

According to some embodiments of the charging control method for the electric device of the present disclosure, it is determined that the charging interface and the external charging device are not connected when it is determined that a pressure applied to the charging interface is less than a set threshold; and/or it is determined that the charging interface and the external charging device are not connected when it is determined that a mechanical-electronic switch is not closed, wherein the mechanical-electronic switch is arranged adjacent to the charging interface.

Additional aspects and advantages of the present disclosure will be partly given in the following description, and partly will become apparent from the following description, or be learned through the practice of the present disclosure.

### BRIEF DESCRIPTION OF THE DRAWINGS

FIG. 1 is a schematic diagram of a battery pack according to an embodiment of the present disclosure;
FIG. 2 is an exploded view of a battery pack according to an embodiment of the present disclosure;
FIG. 3 is a schematic diagram of a battery group according to an embodiment of the present disclosure;
FIG. 4 is a bottom view of a battery pack according to one embodiment of the present disclosure;
FIG. 5 is a bottom view of a battery pack according to another embodiment of the present disclosure;
FIG. 6 is a schematic diagram of a charging control module according to an embodiment of the present disclosure;
FIG. 7 is a schematic diagram illustrating the mounting of a heat exchange assembly and a charging control module according to an embodiment of the present disclosure;
FIG. 8 is a schematic diagram of an opening and closing assembly in an open position according to an embodiment of the present disclosure;
FIG. 9 is a schematic diagram of an opening and closing assembly in a closed position according to an embodiment of the present disclosure;
FIG. 10 is a schematic diagram of a chassis according to an embodiment of the present disclosure;
FIG. 11 is a schematic diagram of an electric device according to an embodiment of the present disclosure;
FIG. 12 is a working flow chart of a charging control method according to an embodiment of the present disclosure;
FIG. 13 is a working flow chart of a charging control method according to an embodiment of the present disclosure.

### LIST OF REFERENCE NUMERALS

Electric device 1000,
battery pack 100, chassis 200,
housing 1, opening 11, guide groove 12,
battery group 2, battery cell 21, busbar component 22, communication module 3, charging interface 4, contact metal sheet 41, positive electrode contact metal sheet 411, negative electrode contact metal sheet 412, grounding contact metal sheet 413, plug interface 42,
charging control module 5, positive electrode switch 51, negative electrode switch 52,
heat exchange assembly 6, extension portion 61, buffer member 7, opening and closing assembly 8, moving member 81, driving member 82, motor 821, rotating member 822, converting member 823, high voltage interface 91, low voltage interface 92.

### DETAILED DESCRIPTION

Embodiments of the present disclosure are described in detail below. Examples of the embodiments are shown in the accompanying drawings, wherein the same or similar reference numerals throughout indicate the same or similar elements or elements having the same or similar functions. The embodiments described below with reference to the accompanying drawings are exemplary and are intended to explain the present disclosure, and will not be construed as limiting the present disclosure.

Hereinafter, a battery pack 100 of an electric device according to an embodiment of the present disclosure will be described with reference to the accompanying drawings.

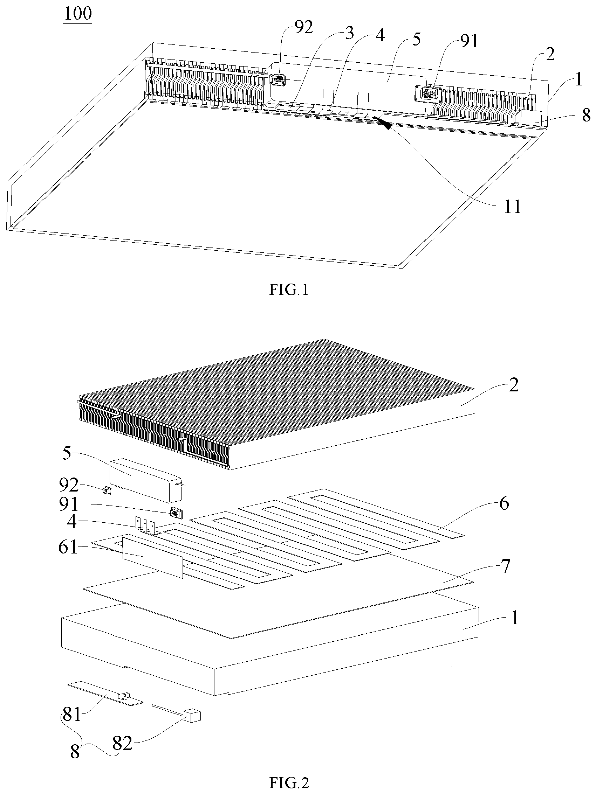

As shown in FIGS. 1 to 11, a battery pack 100 of an electric device according to an embodiment of the present disclosure is provided. The battery pack 100 has a charging interface 4, and the battery pack 100 further includes a housing 1 and a battery group 2. The battery group 2 is disposed within the housing 1. The charging interface 4 is electrically connected to the battery group 2 to charge the battery pack 100 via the charging interface 4. The charging interface 4 is suitable for being directly electrically connected to an external charging device. It will be noted that, in the embodiment of the present disclosure, the charging interface 4 being suitable for being directly electrically connected to an external charging device means that the charging interface 4 can be directly electrically connected to the external charging device so that a vehicle where the battery pack 100 is located can be charged. The charging device refers to any device external to the vehicle for charging the vehicle.

Thus, it helps to shorten the charging current path, reduce electric energy loss caused by power transmission impedance, and improve charging efficiency, thereby reducing charging time.

For example, referring to FIGS. 1 to 4, the battery pack 100 has the charging interface 4. The charging interface 4 can open toward the outside of the battery pack. The charging interface 4 is suitable for being directly electrically connected to the external charging device (such as a charging pile). The battery pack 100 further includes the housing 1 and the battery group 2. The housing 1 is configured in a rectangular box shape, and the housing 1 has an accommodation cavity inside. The battery group 2 is disposed in the accommodation cavity. The battery group 2 has a busbar component 22. The battery group 2 includes a plurality of battery cells 21. The plurality of battery cells 21 are stacked and all electrically connected to the busbar component 22. The busbar component 22 can be electrically connected to the charging interface 4, so that the charging interface 4 can be electrically connected to the plurality of battery cells 21 via the busbar component 22, allowing the external charging device to perform DC charging on the battery group 2 via the charging interface 4 and the busbar component 22.

It will be understood that, by directly disposing the charging interface 4 on the battery pack, the external charging device can directly charge the battery pack 100 via the charging interface 4, which can shorten the charging current path, help to reduce power transmission impedance, and improve charging efficiency. In addition, due to the shortened charging current path, the diameter of a charging harness of the external charging device can be reduced, thereby reducing the overall weight of a charging gun, facilitating user operation, and avoiding mechanical damage to the charging interface 4. It also helps to reduce heat generation during DC fast charging, eliminating the need for additional heat dissipation structures.

According to the battery pack 100 of the electric device of the embodiment of the present disclosure, with the charging interface 4 disposed on the battery pack 100, the external charging device can directly charge the battery pack 100 via the charging interface 4, which helps to shorten the charging current path, reduce electric energy loss caused by power transmission impedance, and improve charging efficiency, thereby reducing charging time.

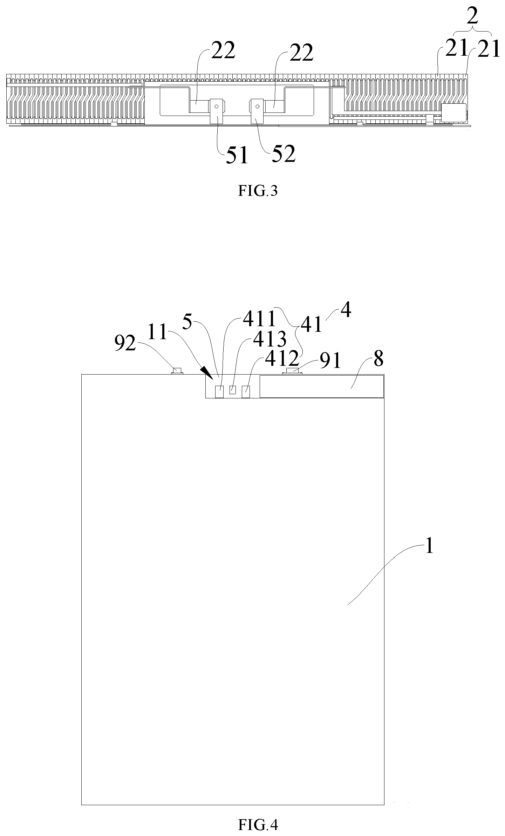

In some embodiments of the present disclosure, as shown in FIG. 4, the charging interface 4 may be disposed at a bottom of the housing 1; alternatively, the charging interface 4 may be disposed at a side of the housing 1, such as at a rear side of the housing 1. Through the above arrangement, the external charging device can be easily electrically connected and engaged with the charging interface 4, improving the design rationality of the battery pack 100.

In some embodiments of the present disclosure, the charging interface 4 includes at least two contact metal sheets 41; and/or the charging interface 4 includes a plug interface 42. For example, referring to FIG. 4, the charging interface 4 may include at least two contact metal sheets 41. The at least two contact metal sheets 41 include a positive electrode contact metal sheet 411 and a negative electrode contact metal sheet 412. The positive electrode contact metal sheet 411 and the negative electrode contact metal sheet 412 are configured for electrical connection with the external charging device, so that the external charging device can charge the battery pack 100 via the contact metal sheets 41. Additionally, the plurality of contact metal sheets 41 may further include at least one grounding contact metal sheet 413. The grounding contact metal sheet 413 is configured for low-voltage connection with the external charging device, together with an insulation detection device of the external charging device or the electric device 1000, to ensure personal safety during charging. It will be noted that the contact metal sheets 41 may be configured as copper busbars plated with nickel or silver.

Direct contact charging via the contact metal sheets 41 not only allows for a larger charging current but also facilitates heat dissipation at the charging contact end during charging, especially during high-current DC charging where the heat dissipation performance requirement for the charging interface 4 is higher. It can be seen that the arrangement of the contact metal sheets 41 on the battery pack for direct contact charging with the external charging device can both reduce heat generation and current limitations caused by external circuits of the battery pack, and meet the heat dissipation requirements for high-current charging.

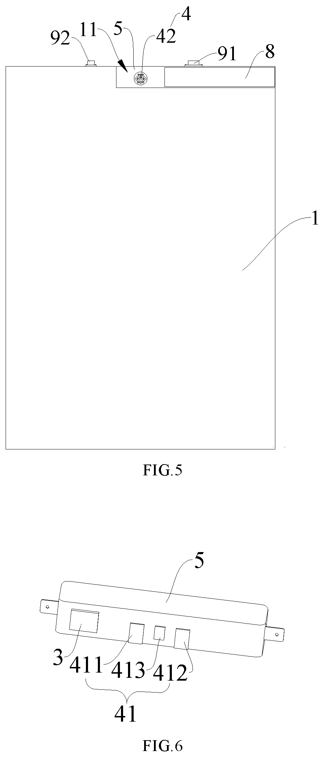

Alternatively, as shown in FIG. 5, the charging interface 4 may include a plug interface 42. The plug interface 42 can be configured as a national standard single gun, national standard dual gun, European standard, etc., according to requirements, facilitating compatibility with all external charging devices. Through the above arrangement, it helps to meet different usage requirements.

It will be noted that the position of the grounding contact metal sheet 413 is not limited to being between the positive electrode contact metal sheet 411 and the negative electrode contact metal sheet 412; it may also be at other positions of the charging interface 4. This helps to meet the requirements of electrical clearance, creepage distance, voltage withstand test, etc., in high-voltage safety.

In some embodiments of the present disclosure, the charging interface 4 includes at least two contact metal sheets 41, the external charging device includes a charging metal sheet, and an area of each of the contact metal sheets 41 is suitable for being larger than an area of the charging metal sheet.

For example, referring to FIG. 4, the charging interface 4 may have the at least two contact metal sheets 41. The at least two contact metal sheets 41 include the positive electrode contact metal sheet 411 and the negative electrode contact metal sheet 412. The external charging device includes charging metal sheets, and the charging metal sheets are two in number. The two charging metal sheets are respectively conducted with the positive electrode contact metal sheet 411 and the negative electrode contact metal sheet 412, so that the external charging device can charge the battery pack via the contact metal sheets 41. Herein, the area of each of the contact metal sheets 41 may be set to be larger than the area of the charging metal sheet, so that the charging metal sheet can easily achieve connection with the contact metal sheet 41, so as to ensure a sufficient connection area between the contact metal sheet 41 and the charging metal sheet. Thus, the reliability of the battery pack 100 is improved. It will be noted that the relative positions of the grounding contact metal sheet 413 with respect to the positive electrode contact metal sheet 411 and the negative electrode contact metal sheet 412 are not limited.

In some embodiments of the present disclosure, a total area of the contact metal sheets 41 of the same polarity may be set to be ≥ 3000 mm². Specifically, when the contact metal sheet 41 of the same polarity is a single sheet, such as one positive electrode contact metal sheet 411, the area of the positive electrode contact metal sheet 411 is set to be greater than or equal to 3000 mm²; and when a plurality of contact metal sheets 41 of the same polarity are arranged, for example, a plurality of positive electrode contact metal sheets 411, the total area of the plurality of positive electrode contact metal sheets 411 is set to be greater than or equal to 3000 mm².

Through the above arrangement, a sufficient connection area between the contact metal sheet 41 and the external charging device can be guaranteed to meet the overcurrent requirement of the battery pack 100, and it can reduce heat generation of the contact metal sheet 41 during charging, improving the design rationality of the battery pack 100. For example, the contact metal sheet 41 may be configured with a size of 60mm x 60mm or more to meet the overcurrent capability requirement of the battery pack 100. In some embodiments, the thickness of the contact metal sheet 41 is 1.5mm to 5mm. Preferably, the thickness of the contact metal sheet 41 is 2.5mm, 3mm, 3.5mm, or 4mm. This thickness can ensure the firmness and strength of the contact metal sheet 41, prevent deformation of the metal sheet 41, and also prevent the battery pack 100 from becoming too thick due to an excessively thick metal sheet 41.

In some embodiments of the present disclosure, the contact metal sheet 41 is suitable for being arranged at an angle with the charging metal sheet. For example, an extension direction of the contact metal sheet 41 and an extension direction of the charging metal sheet may be arranged at an angle of 90° on a horizontal plane. Through the above arrangement, the difficulty of engaging the contact metal sheet 41 with the charging metal sheet can be reduced, which helps to improve the convenience of the charging alignment operation. For example, if the extension direction of the contact metal sheet 41 is the width direction of the battery pack 100, then the extension direction of the charging metal sheet is the length direction of the battery pack 100. The contact metal sheet 41 and the charging metal sheet are arranged at a cross angle to constitute a charging bow structure, thereby providing a certain error margin when aligning the contact metal sheet 41 with the charging metal sheet for charging, and improving alignment accuracy.

In some embodiments of the present disclosure, the battery pack 100 of the electric device according to the embodiment of the present disclosure further includes a charging control module 5. The charging control module 5 includes a main controller, a positive electrode switch 51, and a negative electrode switch 52. The main controller is configured to receive a charging instruction. The main controller is electrically connected to the positive electrode switch 51 and the negative electrode switch 52 respectively to control opening and closing thereof. The charging interface 4 is electrically connected to the battery group 2 via the positive electrode switch 51 and the negative electrode switch 52. Preferably, the positive electrode switch 51 and the negative electrode switch 52 are both DC contactors.

For example, referring to FIGS. 1 to 3, the battery pack 100 further includes the charging control module 5. The charging control module 5 is disposed in the accommodation cavity. The charging control module 5 includes the main controller, the positive electrode switch 51, and the negative electrode switch 52. The main controller is configured to receive a charging instruction. The charging instruction may be manually sent by a user via a button on an instrument panel or a mobile device, or may be automatically generated after sensing with the external charging device, which is not limited in the present disclosure. The main controller is electrically connected to the positive electrode switch 51 and the negative electrode switch 52 respectively, so that the main controller can control opening and closing of the positive electrode switch 51 and the negative electrode switch 52. The charging interface 4 is electrically connected to the positive electrode switch 51 and the negative electrode switch 52, and the positive electrode switch 51 and the negative electrode switch 52 are configured for selective electrical connection with the busbar component 22.

Specifically, when the main controller receives the charging instruction, the main controller can control the positive electrode switch 51 and the negative electrode switch 52 to close, so as to electrically connect the charging interface 4 with the busbar component 22, allowing the charging interface 4 to charge the battery group 2 via the busbar component 22; and when charging is completed or the battery pack 100 overheats, the main controller can control the positive electrode switch 51 and the negative electrode switch 52 to open, thereby stopping charging the battery group 2. Thus, the charging process of the battery pack 100 can be better controlled, improving the reliability of the battery pack 100.

In some embodiments of the present disclosure, the charging interface 4 is exposed from the charging control module 5. For example, referring to FIG. 6, the charging interface 4 may be integrated into the charging control module 5 and electrically connected to the positive electrode switch 51 and the negative electrode switch 52. A part of the charging interface 4 is exposed from the charging control module 5, so that the charging interface 4 can be electrically connected to the external charging device. Thus, the integration level of the battery pack 100 can be improved, which is beneficial for the layout.

In some embodiments of the present disclosure, the charging interface 4 may be electrically connected to an input terminal of the positive electrode switch 51 via a metal conductive piece, and/or the charging interface 4 may be electrically connected to an input terminal of the negative electrode switch 52 via a metal conductive piece. It will be noted that the metal conductive piece may be configured as a copper busbar. The conductive cross-section of a copper busbar is generally larger than that of a wire harness, which is more convenient for DC fast charging, and the copper busbar is more conducive to reliable electrical connection. Through the above arrangement, the relative positions between the charging interface 4 and the positive electrode switch 51 and the negative electrode switch 52 can be flexibly arranged, which helps to reduce the difficulty of the layout of the battery pack 100 and improves the practicability of the battery pack 100.

In some embodiments of the present disclosure, the battery group 2 includes a plurality of battery cells 21. The plurality of battery cells 21 are stacked and all electrically connected to the busbar component 22. An output terminal of the positive electrode switch 51 may be directly electrically connected to the busbar component 22, and/or an output terminal of the negative electrode switch 52 may be directly electrically connected to the busbar component 22. Through the above arrangement, the structure of the battery pack 100 can be simplified, which helps to reduce the processing difficulty and cost of the battery pack 100, and helps to shorten the length of the charging path inside the battery pack 100, so as to minimize heat generation in the charging path and facilitate fast charging with a larger current.

In some embodiments of the present disclosure, the battery pack 100 according to the embodiment of the present disclosure further includes a communication module 3. The communication module 3 interacts with an external device to receive the charging instruction. The communication module 3 is communicatively connected to the main controller. The communication module 3 is configured to transmit the received charging instruction to the main controller, so that the main controller can control the positive electrode switch 51 and the negative electrode switch 52 according to the charging instruction. Specifically, the external device may be a button on an instrument panel, a mobile device, or an external charging device, which is not limited in the present disclosure. Thus, the reliability of the battery pack 100 can be improved.

In some embodiments of the present disclosure, the battery pack 100 of the electric device according to the embodiment of the present disclosure further includes a heat exchange assembly 6 configured for heat exchange with the battery group 2. For example, referring to FIG. 2, the battery pack 100 further includes the heat exchange assembly 6. The heat exchange assembly 6 is mounted in the accommodation cavity of the housing 1 and attached to a side wall of the battery group 2. For example, the heat exchange assembly 6 may be attached to a lower side wall of the battery group 2, so that the heat exchange assembly 6 can perform heat exchange with the battery group 2. Through the above arrangement, the temperature of the battery group 2 can be prevented from being too high during charging, improving the safety of the battery pack 100.

Specifically, the heat exchange assembly 6 may include a heat exchange tube. The heat exchange tube has a liquid inlet and a liquid outlet. Both the liquid inlet and the liquid outlet are in communication with an external pipeline. A heat exchange medium can flow into the heat exchange tube from the liquid inlet and flow out through the liquid outlet. The heat exchange medium is used for heat exchange with the battery group 2. Alternatively, the heat exchange assembly 6 may include a heat exchange portion. The heat exchange portion is made of a phase change heat exchange medium, and the heat exchange portion is used for heat exchange with the battery group 2.

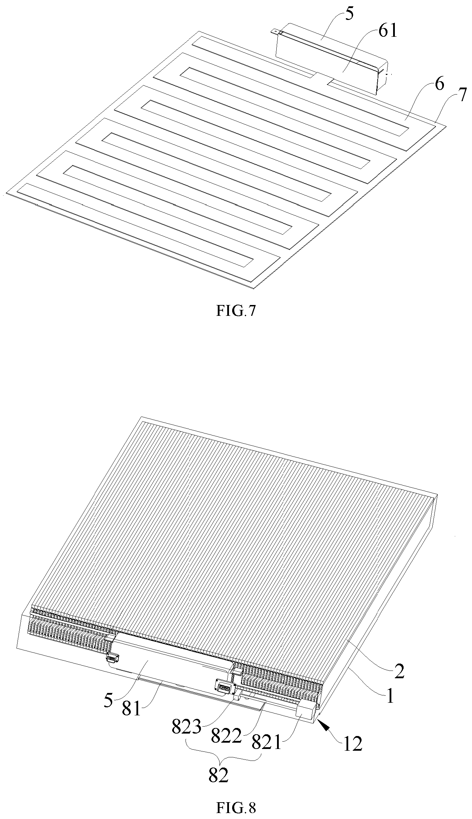

In some embodiments of the present disclosure, a part of the heat exchange assembly 6 extends to the charging control module 5 to perform heat exchange with the charging control module 5. For example, referring to FIGS. 2 and 7, the charging control module 5 may be disposed outside the battery group 2, and the heat exchange assembly 6 may be arranged at a lower side of the battery group 2 to be attached to the lower side wall of the battery group 2. The heat exchange assembly 6 has an extension portion 61. The extension portion 61 extends upward to the charging control module 5 and is attached to a side wall of the charging control module 5, so that the heat exchange assembly 6 can perform heat exchange with the charging control module 5. Thus, the operating temperature of the charging control module 5 can be reduced, which helps to improve the reliability of the battery pack 100.

In some embodiments of the present disclosure, the battery pack 100 of the electric device according to the embodiment of the present disclosure further includes a buffer member 7. The buffer member 7 is made of an elastic insulating material such as rubber or foam. The buffer member 7 is sandwiched between a bottom wall of the housing 1 and the battery group 2. The buffer member 7 can support the battery group 2 to improve the mounting stability of the battery group 2, and the buffer member 7 can also provide cushioning when the housing 1 is impacted, so as to protect the battery group 2. Thus, the reliability of the battery pack 100 is improved.

It will be noted that when the heat exchange assembly 6 is disposed at the bottom of the battery group 2, the buffer member 7 can separate the heat exchange assembly 6 from the bottom of the housing 1 to protect the heat exchange assembly 6. Thus, the reliability of the battery pack 100 is improved.

In some embodiments of the present disclosure, the housing 1 has an opening 11 for clearing the charging interface 4. For example, referring to FIG. 1, the charging interface 4 is disposed in the accommodation cavity and located outside the battery group 2. The housing 1 has the opening 11. The opening 11 is configured to clear the charging interface 4, so that the external charging device can be electrically connected to the charging interface 4 via the opening 11.

Through the above arrangement, the housing 1 can shield and protect the charging interface 4, which helps to reduce the probability of the charging interface 4 being damaged or contacting other components, and improves the reliability of the battery pack 100.

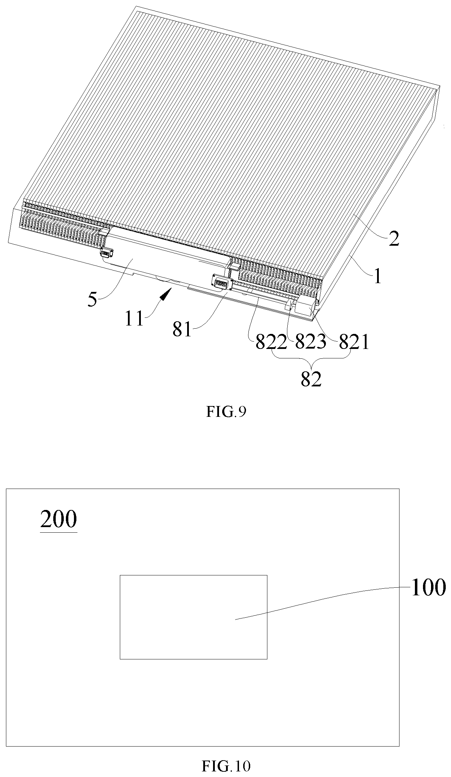

In some embodiments of the present disclosure, referring to FIG. 1, the battery pack 100 of the electric device according to the embodiment of the present disclosure further includes an opening and closing assembly 8. The opening and closing assembly 8 is located on a side of the housing 1 that has the opening 11, and the opening and closing assembly 8 is configured to open or close the opening 11. Specifically, as shown in FIG. 9, when the battery pack 100 needs to be charged, the opening and closing assembly 8 can be switched to an open position to open the opening 11, thereby exposing the charging interface 4, so that the charging gun of the external charging device can be electrically connected to the charging interface 4. As shown in FIG. 8, after the battery pack 100 is charged and the charging gun is disengaged from the charging interface 4, the opening and closing assembly 8 can be switched to a closed position to close the opening 11, thereby sealing the charging interface 4 within the housing 1 to prevent the charging interface 4 from contacting other components. Thus, the reliability of the battery pack 100 can be improved.

In some embodiments of the present disclosure, the opening and closing assembly 8 includes a moving member 81 and a driving member 82. The moving member 81 is movably disposed on the housing 1 to open or close the opening 11. The driving member 82 is connected to the moving member 81 to drive the moving member 81 to move. For example, referring to FIGS. 2, 8, and 9, the opening and closing assembly 8 includes the moving member 81 and the driving member 82. The moving member 81 is movably mounted on the side of the housing 1 that has the opening 11. The driving member 82 is connected to the moving member 81. The driving member 82 is configured to drive the moving member 81 to move to the closed position to close the opening 11, and to drive the moving member 81 to move to the open position to open the opening 11. Through the above arrangement, the stability of the opening 11 when switching between different states is improved.

In some embodiments of the present disclosure, the driving member 82 includes: a motor 821, a rotating member 822, and a converting member 823. The rotating member 822 is connected to the motor 821 so as to be driven by the motor 821 to rotate. The converting member 823 is connected to the rotating member 822 and the moving member 81 respectively. The converting member 823 is configured to convert rotation of the rotating member 822 into movement of the moving member 81.

For example, referring to FIGS. 8 and 9, the driving member 82 includes the motor 821, the rotating member 822, and the converting member 823. The moving member 81 is movably mounted on the housing 1. The motor 821 is located on one side of the moving member 81 along its moving direction. The rotating member 822 is configured in a columnar shape. The rotating member 822 extends along the moving direction and is connected to an output end of the motor 821, so that the motor 821 can drive the rotating member 822 to rotate. The converting member 823 is fixed on the moving member 81 and connected to the rotating member 822. The converting member 823 is configured to convert rotation of the rotating member 822 into movement of the moving member 81, so that the motor 821 can drive the moving member 81 to move via the rotating member 822 and the converting member 823.

Through the above arrangement, the structure of the driving member 82 can be simplified, the overall size of the driving member 82 can be reduced, thereby being beneficial for layout and improving the practicability of the battery pack 100.

In some embodiments of the present disclosure, the housing 1 has a guide groove 12 for guiding a movement direction of the moving member 81, and the moving member 81 is movably engaged with the guide groove 12. For example, referring to FIG. 8 and FIG. 9, the guide groove 12 may be arranged on a side wall of the housing 1. The guide groove 12 extends along the movement direction of the moving member 81 and at least partially overlaps with the opening 11. The moving member 81 is movably mounted in the guide groove 12. When the driving member 82 drives the moving member 81 to move, the side wall of the guide groove 12 can guide the moving member 81. Thus, the movement stability of the moving member 81 can be improved, the switching stability of the opening 11 is enhanced, and it helps to reduce the space occupied by the moving member 81.

In some embodiments of the present disclosure, the battery pack 100 of the electric device according to the embodiment of the present disclosure further includes the charging control module 5. The charging control module 5 is electrically connected to the charging interface 4 and the battery group 2 respectively. The charging control module 5 is configured to control connection between the charging interface 4 and the battery group 2 when receiving the charging instruction. The charging control module 5 is electrically connected to the opening and closing assembly 8, and the charging control module 5 is configured to control the opening and closing assembly 8 to open the opening 11 when receiving the charging instruction.

For example, referring to FIG. 1 and FIG. 2, the battery pack 100 further includes the charging control module 5. The charging control module 5 is electrically connected to the charging interface 4 and the busbar component 22 respectively. The charging control module 5 is configured to control connection between the charging interface 4 and the busbar component 22 when receiving the charging instruction, so that the charging interface 4 can charge the battery group 2 via the busbar component 22. At the same time, the charging control module 5 may be electrically connected to the opening and closing assembly 8, and the charging control module 5 is configured to control the opening and closing assembly 8 to open the opening 11 when receiving the charging instruction.

Specifically, when the charging control module 5 receives the charging instruction, the charging control module 5 can control the opening and closing assembly 8 to open the opening 11, so that the charging gun of the external charging device can engage with the charging interface 4 through the opening 11, and the charging control module 5 can control connection between the charging interface 4 and the busbar component 22, allowing the charging interface 4 to charge the battery group 2 via the busbar component 22. When charging is completed or the battery pack 100 overheats, the charging control module 5 can control disconnection between the charging interface 4 and the busbar component 22, thereby stopping charging the battery group 2. Subsequently, the charging gun can be disengaged from the charging interface 4, and then the charging control module 5 controls the closing assembly to close the opening 11. Thus, the reliability of the battery pack 100 during charging can be improved.

In some embodiments of the present disclosure, the charging interface 4 is exposed from the battery pack 100. The electric device 1000 has a relief opening. The relief opening is used for clearing the charging interface 4, so that the charging gun of the external charging device can directly dock with the charging interface 4 through the relief opening. Through the above arrangement, the difficulty of docking the charging gun with the charging interface 4 can be reduced, which helps to improve user convenience, and helps in simplifying the structure of the battery pack 100 and improving the waterproofness of the battery group 2.

In some embodiments of the present disclosure, the battery pack 100 according to the embodiment of the present disclosure further includes a high voltage interface 91 and a low voltage interface 92. The high voltage interface 91 and the low voltage interface 92 are disposed on the housing 1 and are respectively electrically connected to the battery group 2. The battery pack 100 is suitable for supplying power to other components of the electric device 1000 via the high voltage interface 91 and the low voltage interface 92. Thus, the design rationality of the battery pack 100 is improved.

The present disclosure also provides a chassis 200 of a vehicle.

As shown in FIG. 10, a chassis 200 of a vehicle according to an embodiment of the present disclosure includes the battery pack 100 of the electric device according to any one of the above embodiments.

According to the chassis 200 of the vehicle of the embodiment of the present disclosure, with the charging interface 4 disposed on the battery pack 100, the external charging device can directly charge the battery pack 100 via the charging interface 4, which helps to shorten the charging current path, reduce electric energy loss caused by power transmission impedance, improve charging efficiency, reduce charging time, and improve the overall performance of the chassis 200.

In some embodiments of the present disclosure, the housing 1 may be configured as a part of a floor panel of the vehicle. Through the above arrangement, the battery pack 100 can be integrated with the chassis 200 (i.e., cell-to-body technology), which helps to save space within the vehicle, so that the vehicle can accommodate more and larger batteries, improving the vehicle's range.

The present disclosure also provides an electric device 1000.

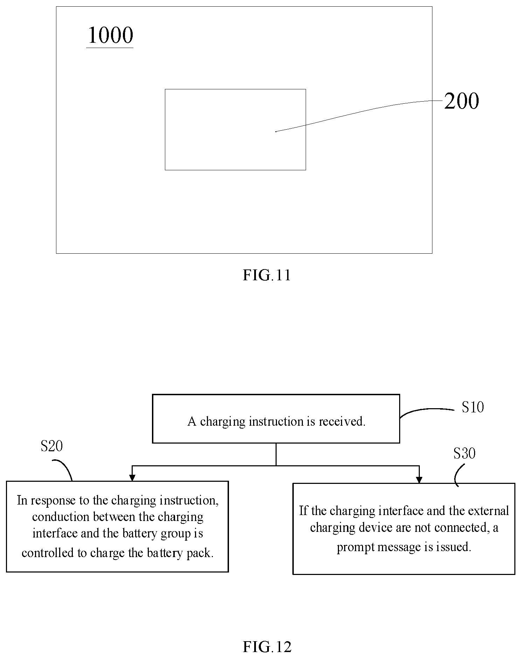

As shown in FIG. 11, an electric device 1000 according to an embodiment of the present disclosure includes the battery pack 100 of the electric device according to any one of the above embodiments or includes the chassis 200 of the vehicle according to any one of the above embodiments. The vehicle is charged directly via the charging interface 4. It will be noted that the electric device 1000 may be a vehicle, an aircraft, a ship, or the like.

According to the electric device 1000 of the embodiment of the present disclosure, with the charging interface 4 disposed on the battery pack 100, the external charging device can directly charge the battery pack 100 via the charging interface 4, which helps to shorten the charging current path, reduce electric energy loss caused by power transmission impedance, improve charging efficiency, reduce charging time, and enhance user satisfaction.

The present disclosure further provides a charging control method for an electric device.

As shown in FIG. 12, a charging control method for an electric device according to an embodiment of the present disclosure is provided. The electric device 1000 includes the battery pack 100 according to any one of the above embodiments. The control method includes:

S10: A charging instruction is received. That is, after a user drives the electric device 1000 into a charging parking space, the user can issue a charging instruction via a car key or a button on an instrument panel, so that the communication module 3 of the battery pack 100 can receive the charging instruction.

S20: In response to the charging instruction, connection between the charging interface 4 and the battery group 2 is controlled to charge the battery pack 100. That is, after the communication module 3 receives the charging instruction, the communication module 3 can transmit the charging instruction to the charging control module 5, so that the charging control module 5 can control connection between the charging interface 4 and the busbar component 22, allowing the charging interface 4 to charge the battery group 2 via the busbar component 22. When the battery pack 100 is fully charged or its temperature is too high, the charging control module 5 can disconnect the charging interface 4 from the busbar component 22 to stop charging the battery pack 100.

According to the charging control method for the electric device of the embodiment of the present disclosure, by configuring the charging interface 4 to be electrically connected to the busbar component 22 after receiving the charging instruction, it is possible to prevent the battery pack 100 from being electrically connected to an external charging device in a non-charging state, which helps to improve the safety of the battery pack 100.

In some embodiments of the present disclosure, as shown in FIG. 12, before controlling the connection between the charging interface 4 and the busbar component 22, the method further includes:

S30: If the charging interface 4 and the external charging device are not connected, a prompt message is issued. That is, after the charging control module 5 receives the charging instruction, the charging control module 5 can detect the connection status between the charging interface 4 and the external charging device. If the charging interface 4 is successfully connected to the external charging device, the charging control module 5 can control connection between the charging interface 4 and the busbar component 22. If the charging interface 4 is not connected to the external charging device, the charging control module 5 can issue the prompt message to remind the user to replace the external charging device or check the connection status of the external charging device. Specifically, the prompt message can be a voice reminder or an icon signal displayed on a panel, which is not limited in the present disclosure. Thus, the user can be informed of the charging status of the battery pack 100, which helps to provide feedback and improves user satisfaction.

In some embodiments of the present disclosure, it is determined that the charging interface 4 and the external charging device are not connected when it is determined that a pressure applied to the charging interface 4 is less than a set threshold; and/or it is determined that the charging interface 4 and the external charging device are not connected when it is determined that a mechanical-electronic switch is not closed, wherein the mechanical-electronic switch is arranged adjacent to the charging interface 4. For example, a pressure sensor may be disposed at the charging interface 4; alternatively, a pressure sensor may be disposed on the charging gun of the external charging device; or pressure sensors may be disposed at both the charging interface 4 and the charging gun of the external charging device, which is not limited in the present disclosure.

That is, after the charging control module 5 receives the charging instruction, the charging control module 5 can detect the pressure applied to the charging interface 4 via the pressure sensor. When the detected pressure is less than the set threshold, it may indicate that the external charging device is not connected or is loosely connected to the charging interface 4, and it can be determined that the charging interface 4 is not connected to the external charging device, and the prompt message is issued. When the detected pressure is greater than or equal to the set threshold, it can be determined that the charging interface 4 is successfully connected to the external charging device, and the battery pack 100 starts charging. This helps to reduce detection difficulty, improve detection accuracy, and enhance the reliability of the battery pack.

Alternatively, a mechanical-electronic switch may be disposed on the battery pack 100 at a position adjacent to the charging interface 4. When the charging gun of the external charging device extends toward the charging interface 4, if the charging gun contacts the mechanical-electronic switch, causing the mechanical-electronic switch to close, it can be determined that the external charging device is connected to the charging interface 4. If the charging gun does not contact the mechanical-electronic switch, and the mechanical-electronic switch remains open, it can be determined that the external charging device is not connected to the charging interface 4. This can improve the reliability of detection.

Of course, a pressure sensor may be disposed on the charging interface 4, and a mechanical-electronic switch may be disposed on the battery pack 100 at a position adjacent to the charging interface 4. This can improve detection accuracy.

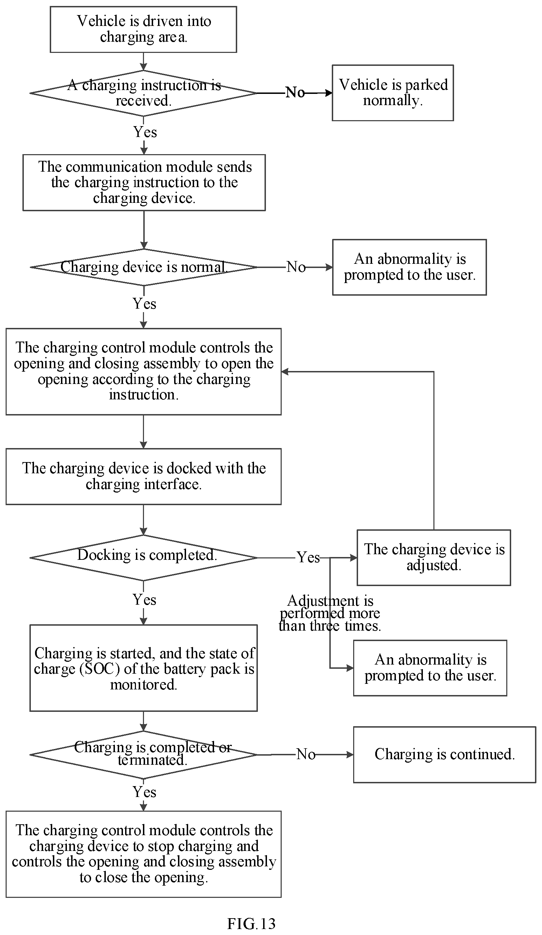

In a specific working process, as shown in FIG. 13, when a user drives the electric device 1000 into a charging area equipped with bottom charging, the communication module 3 can sense the external charging device, and after user confirmation, acquire the charging instruction. If the user refuses to confirm or fails to confirm within a time limit, the electric device 1000 parks normally. It will be noted that the external charging device may also perform user ID recognition and send a billing plan.

Then, the communication module 3 can send the charging instruction to the charging control module 5. After receiving the charging instruction, the main controller of the charging control module 5 can send the charging instruction to the external charging device via a vehicle-mounted wireless module. The external charging device performs a self-check. If the external charging device malfunctions, an abnormality prompt is issued to the user. If the external charging device is normal, the main controller of the charging control module 5 can output an opening signal to the opening and closing assembly 8. The motor 821 runs to drive the rotating member 822 to rotate. The rotating member 822 can drive the moving member 81 to move within the guide groove 12 via the converting member 823, thereby opening the opening 11. At this point, the charging interface 4 is exposed, the external charging device starts working, and the charging gun can extend into the opening 11 and dock with the charging interface 4, including but not limited to plug-in type or contact type.

Next, it can be determined whether the docking between the charging interface 4 and the external charging device is completed. If it is determined that the charging interface 4 is not docked with the external charging device, the charging gun can be adjusted, and the determination is continued after adjustment. If the number of adjustments exceeds three times, an abnormality prompt is issued to the user. If it is determined that the docking between the charging interface 4 and the external charging device is completed, the charging control module 5 can control the positive electrode switch 51 and the negative electrode switch 52 to electrically connect with the busbar component 22, so that the charging interface 4 can charge the battery group 2 via the busbar component 22. At this time, the heat exchange assembly 6 starts working. The heat exchange assembly 6 can perform heat exchange with the battery group 2 and the charging control module 5 respectively, to prevent the temperature of the battery pack 100 from being too high.

Subsequently, when the main controller of the charging control module 5 starts to monitor the SOC of the battery pack 100 in real time, when the battery pack 100 is fully charged or a user termination charging instruction is received, the vehicle-mounted wireless module outputs a charging completion signal. After receiving the charging completion signal, the external charging device controls the charging gun to retract from the opening 11 to disconnect the electrical connection with the charging interface 4. Then, the main controller of the charging control module 5 outputs the opening signal to the opening and closing assembly 8. The motor 821 starts running to drive the rotating member 822 to rotate in reverse. The rotating member 822 can drive the moving member 81 to move within the guide groove 12 via the converting member 823, thereby closing the opening 11. Finally, the user completes the payment and starts the vehicle to leave the charging area.

In the description of the present disclosure, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicating orientations or positional relationships are based on the orientations or positional relationships shown in the drawings. They are only for the convenience of describing the present disclosure and simplifying the description, and do not indicate or imply that the device or element referred to must have a specific orientation, be constructed and operated in a specific orientation. Therefore, they will not be construed as limiting the present disclosure.

Furthermore, the terms "first" and "second" are used for descriptive purposes only and will not be understood as indicating or implying relative importance or implicitly indicating the number of indicated technical features. Thus, features defined with "first" and "second" may explicitly or implicitly include one or more of these features. In the description of the present disclosure, "plurality" means two or more, unless otherwise explicitly and specifically defined.

In the present disclosure, unless otherwise explicitly specified and defined, the terms "mounted", "connected", "coupled", "fixed", etc., will be understood broadly. For example, it may be a fixed connection, a detachable connection, or integral; it may be a mechanical connection or an electrical connection; it may be a direct connection or an indirect connection through an intermediate medium; it may be internal communication between two elements or an interaction relationship between two elements. For those of ordinary skill in the art, the specific meanings of the above terms in the present disclosure will be understood according to specific circumstances.

In the present disclosure, unless otherwise explicitly specified and defined, a first feature being "on" or "under" a second feature may mean that the first and second features are in direct contact, or the first and second features are in indirect contact through an intermediate medium. Moreover, a first feature being "above", "over", and "on" a second feature may mean that the first feature is directly above or obliquely above the second feature, or merely indicates that the horizontal height of the first feature is higher than that of the second feature. A first feature being "below", "under", and "beneath" a second feature may mean that the first feature is directly below or obliquely below the second feature, or merely indicates that the horizontal height of the first feature is less than that of the second feature.

In the description of this specification, descriptions with reference to the terms "one embodiment", "some embodiments", "example", "specific example", or "some examples" mean that specific features, structures, materials, or characteristics described in connection with the embodiment or example are included in at least one embodiment or example of the present disclosure. In this specification, the schematic representations of the above terms are not necessarily directed to the same embodiment or example. Moreover, the specific features, structures, materials, or characteristics described may be combined in a suitable manner in any one or more embodiments or examples. Furthermore, those skilled in the art may combine and assemble different embodiments or examples and features of different embodiments or examples described in this specification without contradicting each other.

Although the embodiments of the present disclosure have been shown and described above, it will be understood that the above embodiments are exemplary and will not be construed as limiting the present disclosure. Those of ordinary skill in the art may make changes, modifications, substitutions, and variations to the above embodiments within the scope of the present disclosure.

## Claims

1. A battery pack (100) of an electric device (1000), the battery pack (100) having a charging interface (4), and the battery pack (100) further comprising:
a housing (1); and
a battery group (2), the battery group (2) being disposed within the housing (1), the charging interface (4) being electrically connected to the battery group (2) so as to charge the battery pack (100) via the charging interface (4); and the charging interface (4) being suitable for being directly electrically connected to an external charging device.

2. The battery pack (100) of an electric device according to claim 1, wherein the charging interface (4) is disposed at a bottom or a side of the housing (1).

3. The battery pack (100) of an electric device according to claim 1 or 2, wherein the charging interface (4) comprises at least two contact metal sheets (41); and/or the charging interface (4) comprises a plug interface (42).

4. The battery pack (100) of an electric device according to claim 3, wherein the charging interface (4) comprises at least two contact metal sheets (41), the external charging device comprises a charging metal sheet, and an area of each of the contact metal sheets (41) is suitable for being larger than an area of the charging metal sheet.

5. The battery pack (100) of an electric device according to claim 4, wherein a total area of the contact metal sheets (41) of the same polarity is ≥ 3000 mm².

6. The battery pack (100) of an electric device according to claim 4 or 5, wherein the contact metal sheet (41) is suitable for being arranged at an angle with the charging metal sheet.

7. The battery pack (100) of an electric device according to claim 1, further comprising a charging control module (5), wherein the charging control module (5) comprises a main controller, a positive electrode switch (51), and a negative electrode switch (52), the main controller is configured to receive a charging instruction, the main controller is electrically connected to the positive electrode switch (51) and the negative electrode switch (52) respectively to control opening and closing thereof, and the charging interface (4) is electrically connected to the battery group (2) via the positive electrode switch (51) and the negative electrode switch (52).

8. The battery pack (100) of an electric device according to claim 7, wherein the charging interface (4) is exposed from the charging control module (5).

9. The battery pack (100) of an electric device according to claim 7 or 8, wherein the charging interface (4) is electrically connected to an input terminal of the positive electrode switch (51) via a metal conductive piece, and/or the charging interface (4) is electrically connected to an input terminal of the negative electrode switch (52) via a metal conductive piece.

10. The battery pack (100) of an electric device according to any one of claims 7 to 9, wherein the battery group (2) comprises a plurality of battery cells (21), the plurality of battery cells (21) are electrically connected to a busbar component (22); an output terminal of the positive electrode switch (51) is directly electrically connected to the busbar component (22), and/or an output terminal of the negative electrode switch (52) is directly electrically connected to the busbar component (22).

11. The battery pack (100) of an electric device according to any one of claims 7 to 10, further comprising a communication module (3), wherein the communication module (3) interacts with an external device to receive the charging instruction, and the communication module (3) is communicatively connected to the main controller.

12. The battery pack (100) of an electric device according to any one of claims 7 to 11, further comprising a heat exchange assembly (6) configured for heat exchange with the battery group (2).

13. The battery pack (100) of an electric device according to claim 12, wherein a part of the heat exchange assembly (6) extends to the charging control module (5) to perform heat exchange with the charging control module (5).

14. The battery pack (100) of an electric device according to any one of claims 1 to 13, further comprising a buffer member (7), wherein the buffer member (7) is arranged between a bottom wall of the housing (1) and the battery group (2).

15. The battery pack (100) of an electric device according to any one of claims 1 to 14, wherein the housing (1) has an opening (11) for clearing the charging interface (4).

16. The battery pack (100) of an electric device according to claim 15, further comprising an opening and closing assembly (8) for opening or closing the opening (11), wherein the opening and closing assembly (8) is disposed on the housing (1).

17. The battery pack (100) of an electric device according to claim 16, wherein the opening and closing assembly (8) comprises a moving member (81) and a driving member (82), the moving member (81) is movably disposed on the housing (1) to open or close the opening (11), and the driving member (82) is connected to the moving member (81) to drive the moving member (81) to move.

18. The battery pack (100) of an electric device according to claim 17, wherein the driving member (82) comprises:
a motor (821);
a rotating member (822), wherein the rotating member (822) is connected to the motor (821) so as to be driven by the motor (821) to rotate; and
a converting member (823), wherein the converting member (823) is connected to the rotating member (822) and the moving member (81) respectively, and the converting member (823) is configured to convert rotation of the rotating member (822) into movement of the moving member (81).

19. The battery pack (100) of an electric device according to claim 17 or 18, wherein the housing (1) has a guide groove (12) for guiding a movement direction of the moving member (81), and the moving member (81) is movably engaged with the guide groove (12).

20. The battery pack (100) of an electric device according to any one of claims 16 to 19, further comprising a charging control module (5), wherein the charging control module (5) is electrically connected to the charging interface (4) and the battery group (2) respectively, and the charging control module (5) is configured to control connection between the charging interface (4) and the battery group (2) when receiving the charging instruction;
the charging control module (5) is electrically connected to the opening and closing assembly (8), and the charging control module (5) is configured to control the opening and closing assembly (8) to open the opening (11) when receiving the charging instruction.

21. The battery pack (100) of an electric device according to any one of claims 1 to 20, wherein the charging interface (4) is exposed from the battery pack (100), and the electric device (1000) has a relief opening for clearing the charging interface (4).

22. A chassis (200) of a vehicle, comprising the battery pack (100) of an electric device according to any one of claims 1 to 21.

23. The chassis (200) of a vehicle according to claim 22, wherein the housing (1) is configured as a part of a floor panel of the vehicle.

24. An electric device (1000), comprising the battery pack (100) of the electric device according to any one of claims 1 to 21 or comprising the chassis (200) of the vehicle according to claim 22 or 23, wherein the vehicle is charged directly via the charging interface (4).

25. A charging control method for an electric device, the electric device (1000) comprising the battery pack (100) according to any one of claims 1 to 21, and the control method comprising:
receiving a charging instruction; and
in response to the charging instruction, controlling connection between the charging interface (4) and the battery group (2) to charge the battery pack (100).

26. The charging control method for an electric device according to claim 25, wherein before controlling the connection between the charging interface (4) and the battery group (2), the method further comprises: if the charging interface (4) and an external charging device are not connected, issuing a prompt message.

27. The charging control method for an electric device according to claim 26, wherein it is determined that the charging interface (4) and the external charging device are not connected when it is determined that a pressure applied to the charging interface (4) is less than a set threshold; and/or
it is determined that the charging interface (4) and the external charging device are not connected when it is determined that a mechanical-electronic switch is not closed, wherein the mechanical-electronic switch is arranged adjacent to the charging interface (4).
